(19) Europäisches Patentamt
European Patent Office
Office européen des brevets

(11) **EP 4 000 984 A1**

(12) **EUROPÄISCHE PATENTANMELDUNG**

(43) Veröffentlichungstag:
**25.05.2022  Patentblatt 2022/21**

(21) Anmeldenummer: **21207516.2**

(22) Anmeldetag: **10.11.2021**

(51) Internationale Patentklassifikation (IPC):
*B60L 3/00* (2019.01)     *B60L 3/04* (2006.01)
*B60L 3/06* (2006.01)     *B60L 9/18* (2006.01)
*B60L 58/10* (2019.01)     *B60W 30/188* (2012.01)
*B60L 50/53* (2019.01)     *B60L 15/10* (2006.01)

(52) Gemeinsame Patentklassifikation (CPC):
**B60L 3/0046; B60L 3/04; B60L 3/06; B60L 9/18;
B60L 15/10; B60L 50/53; B60L 58/10;
B60W 30/188;** B60L 2200/26; B60L 2240/549

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **18.11.2020  DE 102020214498**

(71) Anmelder: **Siemens Mobility GmbH
81739 München (DE)**

(72) Erfinder: **Hassler, Stefan
91281 Kirchenthumbach, OT Neuzirkendorf (DE)**

(54) **FAHRZEUG UND VERFAHREN ZU DESSEN BETRIEB**

(57)    Die Erfindung betrifft insbesondere ein Fahrzeug mit einem Gleichspannungszwischenkreis, zumindest einem an den Gleichspannungszwischenkreis angeschlossenen Antriebsmotor, einer den Antriebsmotor ansteuernden Motorsteuereinrichtung und zumindest einer an den Gleichspannungszwischenkreis angeschlossenen elektrischen Speichereinrichtung, wobei eine Leistungsvorgabeeinrichtung der Motorsteuereinrichtung einen eine maximale Motorleistung angebenden Leistungsbegrenzungswert vorgibt, wobei die Motorsteuereinrichtung ausgebildet ist, eine tatsächliche Leistung des Antriebsmotors unter Berücksichtigung des Leistungsbegrenzungswerts zu begrenzen, und wobei die Leistungsvorgabeeinrichtung eine Reduktionseinrichtung aufweist, wobei die Reduktionseinrichtung einen Vorgabewert als den Leistungsbegrenzungswert vorgibt, solange der Betrag eines Speicherstroms kleiner oder gleich einem vorgegebenen Maximalstromwert ist, und von dem Vorgabewert einen Korrekturwert subtrahiert und den reduzierten Vorgabewert als den Leistungsbegrenzungswert vorgibt, wenn der Betrag des Speicherstroms größer als der vorgegebene Maximalstromwert ist.

FIG 2

EP 4 000 984 A1

**Beschreibung**

Die Erfindung bezieht sich auf ein Fahrzeug, das mit einem Gleichspannungszwischenkreis, zumindest einem an den Gleichspannungszwischenkreis angeschlossenen Antriebsmotor, einer den Antriebsmotor ansteuernden Motorsteuereinrichtung und zumindest einer an den Gleichspannungszwischenkreis angeschlossenen elektrischen Speichereinrichtung ausgestattet ist. Die Erfindung bezieht sich ferner auf eine Leistungsvorgabeeinrichtung für ein Fahrzeug sowie ein Verfahren zum Betreiben eines Fahrzeugs.

Fahrzeuge dieser Art sind beispielsweise in Form von Schienenfahrzeugen im Bereich der Eisenbahntechnik bekannt. Die Speichereinrichtung der bekannten Schienenfahrzeuge kann im Antriebsbetrieb des Antriebsmotors zur Bereitstellung elektrischer Energie herangezogen werden und im Bremsbetrieb des Antriebsmotors zur Speicherung der freiwerdenden Bremsenergie dienen.

Im Falle einer überhöhten Leistungsaufnahme oder -abgabe seitens des Antriebsmotors aufgrund einer toleranzbedingten Abweichung des Steuerverhaltens der Motorsteuereinrichtung von einem gewünschten Sollverhalten besteht die Gefahr einer zu hohen Leistungsentnahme oder -einspeisung aus bzw. in den Gleichspannungszwischenkreis, die durch die daran angeschlossene Speichereinrichtung nicht mehr kompensiert werden kann, beispielsweise weil die nötigen Lade- oder Entladeströme in der Speichereinrichtung einen vorgegebenen Maximalstromwert überschreiten würden. Eine solche Situation kann zu einem unerwünschten Auslösen von Schutzeinrichtungen führen, die der Speichereinrichtung vorgeordnet sind. Letzteres Szenario kann wiederum zu einer für den Fahrbetrieb im Streckennetz insgesamt unerfreulichen Außerbetriebsetzung des betroffenen Fahrzeugs führen.

Der Erfindung liegt die Aufgabe zugrunde, Fahrzeuge der beschriebenen Art dahingehend weiterzuentwickeln, dass bei diesen eine überhöhte Leistungsaufnahme oder -abgabe seitens des Antriebsmotors, insbesondere aufgrund einer toleranzbedingten Abweichung des Steuerverhaltens der Motorsteuereinrichtung von einem gewünschten Sollverhalten, verhindert oder zumindest die Wahrscheinlichkeit einer solchen überhöhten Leistungsaufnahme oder -abgabe reduziert ist.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in abhängigen Patentansprüchen angegeben.

Danach ist erfindungsgemäß vorgesehen, dass eine Leistungsvorgabeeinrichtung der Motorsteuereinrichtung einen eine maximale Motorleistung angebenden Leistungsbegrenzungswert vorgibt, wobei die Motorsteuereinrichtung ausgebildet ist, eine tatsächliche Leistung des Antriebsmotors unter Berücksichtigung des Leistungsbegrenzungswerts zu begrenzen, und wobei die Leistungsvorgabeeinrichtung eine Reduktionseinrichtung aufweist, wobei die Reduktionseinrichtung einen Vorgabewert als den Leistungsbegrenzungswert vorgibt, solange der Betrag eines Speicherstroms kleiner oder gleich einem vorgegebenen Maximalstromwert ist, und von dem Vorgabewert einen Korrekturwert subtrahiert und den reduzierten Vorgabewert als den Leistungsbegrenzungswert vorgibt, wenn der Betrag des Speicherstroms größer als der vorgegebene Maximalstromwert ist.

Ein wesentlicher Vorteil des erfindungsgemäßen Fahrzeugs ist darin zu sehen, dass die erfindungsgemäß vorgesehene Reduktionseinrichtung einen Feinabgleich hinsichtlich des Speicherstroms ermöglicht und dabei stets sicherstellt, dass der Maximalstromwert nicht überschritten wird. Auch im Falle einer Toleranz der Motorsteuereinrichtung derart, dass die tatsächliche Motorleistung bzw. die Traktionsleistung im Falle eines Antriebsbetriebs oder die rückgespeiste Bremsleistung im Bremsbetrieb den übermittelten Leistungsbegrenzungswert überschreitet, kann keine Überlastung der Speichereinrichtung auftreten, weil die Reduktionseinrichtung durch Absenken des Vorgabewerts gegensteuert.

Nach einer Weiterbildung des Fahrzeugs weist die Reduktionseinrichtung eine Spannungsermittlungseinrichtung, die einen Leerlaufspannungswert und einen Betrag des Produkts aus dem Speicherstrom und einem Innenwiderstand der Speichereinrichtung addiert und die Summe als einen Spannungsabfallwert ausgibt, und eine Multiplikationseinrichtung auf, die eingangsseitig mit dem Spannungsabfallwert sowie einem Ausgangswert einer Regeleinrichtung beaufschlagt ist und das gebildete Produkt als eine Regelgröße ausgibt, deren Betrag den Korrekturwert bildet.

Nach einer weiteren Weiterbildung ist die Regeleinrichtung ein PI-Regler oder ist durch einen solchen gebildet, der als Eingangsgröße mit dem Maximalstromwert abzüglich des Betrages des Speicherstroms beaufschlagt ist, sofern der Betrag größer oder gleich Null ist, und andernfalls zurückgesetzt wird.

Nach einer weiteren Weiterbildung wird in die Reduktionseinrichtung ein fest vorgegebener, während des Betriebs unveränderter, Vorgabewert eingespeist.

Nach einer zu der vorstehenden Weiterbildung alternativen Weiterbildung weist die Leistungsvorgabeeinrichtung eine Maximalleistungsbestimmungseinrichtung auf, die anhand eines die Speichereinrichtung beschreibenden Speichermodells, des Leerlaufspannungswerts und des Maximalstromwerts einen Maximalleistungswert berechnet, und speist die Maximalleistungsbestimmungseinrichtung den Maximalleistungswert als Vorgabewert in die Reduktionseinrichtung ein.

Der Maximalleistungswert kann dabei wie folgt berechnet werden:

$$Pmax = |Usoc \cdot Imax| + Ri \cdot Imax^2$$

wobei Pmax den Maximalleistungswert, Imax den Maximalstromwert, Ri den Innenwiderstand der Speichereinrichtung und Usoc den Ladezustand der Speichereinrichtung in Form des Leerlaufspannungswerts beschreibt. Der Innenwiderstand Ri und der Ladezustand bilden dabei Modellparameter eines die Speichereinrichtung beschreibenden Speichermodells. Der Ladezustand kann in vorteilhafter Weise durch Beobachten und Integrieren der in die Speichereinrichtung hineinfließenden Ladeströme und der aus der Speichereinrichtung herausfließenden Entladeströme ermittelt werden und der Leerlaufspannungswert Usoc kann dann unter Heranziehung des ermittelten Ladezustands und einer die Speichereinrichtung beschreibenden Ladekurve ermittelt bzw. errechnet werden. Dabei können zusätzliche Einflüsse wie beispielsweise die Abhängigkeit des Innenwiderstands von der Temperatur und dem Ladezustand oder die Abhängigkeit des Leerlaufspannungswerts von der Temperatur berücksichtigt werden.

Durch das Ermitteln des Maximalleistungswerts auf der Basis eines modellierten bzw. errechneten Leerlaufspannungswerts anstelle eines Messwerts, der die an der Speichereinrichtung tatsächliche abfallende Spannung angibt, kann in vorteilhafter Weise eine Rückkopplung vermieden werden, die bei manchen Widerstandswerten des Innenwiderstands zu einem instabilen Gesamtsystemverhalten führen könnte.

Nach einer auf der vorstehenden Weiterbildung basierenden Weiterbildung umfasst die Leistungsvorgabeeinrichtung ferner eine Leistungserhöhungseinrichtung umfasst, die der Reduktionseinrichtung vorgeordnet ist. Dabei erzeugt die Leistungserhöhungseinrichtung nach jedem Rücksetzen als Vorgabewert einen Startwert, der kleiner als der vorgegebene Maximalleistungswert ist, erhöht den Vorgabewert nachfolgend bis maximal auf den Maximalleistungswert, solange eine vorgegebene, auf die Ist-Leistung des Antriebsmotors bezogene Erhöhungsbedingung erfüllt ist und gleichzeitig ein Betrag des Speicherstroms den Maximalstromwert unterschreitet, und speist den Vorgabewert in die Reduktionseinrichtung ein.

Die Leistungserhöhungseinrichtung verarbeitet vorzugsweise den Maximalleistungswert der Maximalleistungsbestimmungseinrichtung und bildet mit diesem den Vorgabewert.

Ein Vorteil der letztgenannten Variante ist darin zu sehen, dass die Leistungserhöhungseinrichtung vermeidet oder vermeiden hilft, dass der Motorsteuereinrichtung ein zu hoher Leistungsbegrenzungswert vorgegeben wird. Denn auch im Falle einer Toleranz der Motorsteuereinrichtung derart, dass die tatsächliche Motorleistung, bzw. die Traktionsleistung im Falle eines Antriebsbetriebs oder die rückgespeiste Bremsleistung im Bremsbetrieb, den übermittelten Leistungsbegrenzungswert überschreitet, wird keine Überlastung der Speichereinrichtung auftreten. Der letztgenannte Aspekt beruht auf dem Gedanken, dass durch ein Erhöhen des Vorgabewerts ausgehend von einem Startwert, der kleiner als der Maximalleistungswert ist, und einem Beobachten des Speicherstroms während des Hochfahrens verhindert werden kann, dass der Betrag des Speicherstroms einen für die Speichereinrichtung vorgegebenen Maximalstromwert überschreitet.

Vorteilhaft ist es, wenn die Leistungserhöhungseinrichtung derart ausgebildet ist, dass sie die motoristleistungsbezogene Erhöhungsbedingung als erfüllt ansieht, wenn der tatsächliche Motoristleistungswert größer als der jeweils aktuelle Leistungsbegrenzungswert ist. Eine zu hohe Ist-Leistung des Antriebsmotors signalisiert der Leistungserhöhungseinrichtung, dass fahrzeugseitig bzw. fahrerseitig eine hohe Leistung abgefragt bzw. beim Bremsen zur Verfügung gestellt wird, sodass, sofern der Vorgabewert noch kleiner als der Maximalleistungswert ist und der Speicherstrom betragsmäßig den Maximalstromwert noch unterschreitet, eine Vorgabeerhöhung möglich und für den Fahrbetrieb vorteilhaft ist.

Alternativ oder zusätzlich kann in vorteilhafter Weise vorgesehen sein, dass die Leistungserhöhungseinrichtung derart ausgebildet ist, dass sie die auf die Ist-Leistung des Antriebsmotors bezogene Erhöhungsbedingung als erfüllt ansieht, wenn der Betrag der Abweichung zwischen der tatsächlichen Ist-Leistung und dem jeweils aktuellen Leistungsbegrenzungswert kleiner als eine vorgegebene Schwelle ist. Auch letztgenannte Schwellenbetrachtung signalisiert, wenn fahrzeugseitig bzw. fahrerseitig eine hohe Leistung abgefragt bzw. beim Bremsen zur Verfügung gestellt wird, sodass, sofern der Vorgabewert noch kleiner als der Maximalleistungswert ist und der Speicherstrom betragsmäßig den Maximalstromwert noch unterschreitet, eine Vorgabeerhöhung möglich und für den Fahrbetrieb vorteilhaft ist.

Nach einer weiteren Weiterbildung weist die Leistungserhöhungseinrichtung ein Rampenglied auf, das den jeweils aktuellen Vorgabewert gemäß einer vorgegebenen Rampe erhöht und den jeweils erhöhten Vorgabewert ausgangsseitig ausgibt, wenn an einem Freigabeeingang des Rampenglieds ein Freigabesignal anliegt, und andernfalls den Vorgabewert ausgangsseitig unverändert lässt.

Nach einer auf der vorstehenden Weiterbildung basierenden weiteren Weiterbildung weist das Rampenglied einen Rücksetzeingang auf, der den ausgangsseitig ausgegebenen Vorgabewert jeweils auf den Startwert zurücksetzt, wenn an dem Rücksetzeingang ein Rücksetzsignal anliegt.

Dem Rücksetzeingang ist vorzugsweise eine Vergleichseinrichtung vorgeordnet, die das Rücksetzsignal erzeugt, sobald die tatsächliche Ist-Leistung des Antriebsmotors den jeweils aktuellen Leistungsbegrenzungswert unterschreitet. Alternativ oder zusätzlich kann dem Rücksetzeingang in vorteilhafter Weise eine Vergleichseinrichtung vorgeordnet sein, die das Rücksetzsignal erzeugt, sobald die tatsächliche Ist-Leistung des Antriebsmotors den jeweils aktuellen Leistungsbegrenzungswert über ein vorgegebenes Maß hinaus unterschreitet. Alternativ oder zusätzlich kann dem Rücksetzeingang in vorteilhafter Weise eine Vergleichseinrichtung vorgeordnet sein, die das Rücksetzsignal erzeugt, sobald die tatsächliche Ist-Leistung des Antriebsmotors den Startwert unterschreitet.

Das Rampenglied weist vorzugsweise auf: einen Integrator, der nach einem jeden Rücksetzen eine vorgegebene Konstante über der Zeit bis zum Erreichen des Maximalleistungswerts integriert, und einen nachgeordneten Leistungsaddierer, der das vom Integrator ausgegebene Integrationsergebnis mit positivem Vorzeichen, einen durch die Differenz zwischen dem Maximalwert und dem Startwert definierten Margenwert mit negativem Vorzeichen und den Maximalleistungswert unter Bildung des Vorgabewerts addiert.

Eine erfindungsgemäße Leistungsvorgabeeinrichtung für ein Fahrzeug, wobei das Fahrzeug mit einem Gleichspannungszwischenkreis, zumindest einem an den Gleichspannungszwischenkreis angeschlossenen Antriebsmotor, einer den Antriebsmotor ansteuernden Motorsteuereinrichtung und zumindest einer an den Gleichspannungszwischenkreis angeschlossenen elektrischen Speichereinrichtung ausgestattet ist, ist ausgestaltet, der Motorsteuereinrichtung einen eine maximale Motorleistung angebenden Leistungsbegrenzungswert vorzugeben, und weist eine Reduktionseinrichtung auf. Die Reduktionseinrichtung ist dabei ausgestaltet, einen in diese eingespeisten Vorgabewert als den Leistungsbegrenzungswert vorzugeben, solange der Betrag eines Speicherstroms kleiner oder gleich einem vorgegebenen Maximalstromwert ist, und von dem Vorgabewert (VW) einen Korrekturwert zu subtrahieren und den reduzierten Vorgabewert als den Leistungsbegrenzungswert vorzugeben, wenn der Betrag des Speicherstroms größer als der vorgegebene Maximalstromwert ist.

Einem erfindungsgemäßen Verfahren zum Betreiben eines Fahrzeugs, wobei das Fahrzeug mit einem Gleichspannungszwischenkreis, zumindest einem an den Gleichspannungszwischenkreis angeschlossenen Antriebsmotor, einer den Antriebsmotor ansteuernden Motorsteuereinrichtung und zumindest einer an den Gleichspannungszwischenkreis angeschlossenen elektrischen Speichereinrichtung ausgestattet ist, zufolge wird der Motorsteuereinrichtung von einer Leistungsvorgabeeinrichtung ein eine maximale Motorleistung angebender Leistungsbegrenzungswert vorgegeben, wird von der Motorsteuereinrichtung eine tatsächliche Leistung des Antriebsmotors unter Berücksichtigung des Leistungsbegrenzungswerts begrenzt, und wird von einer Reduktionseinrichtung der Leistungsvorgabeeinrichtung ein in diese eingespeister Vorgabewert als Leistungsbegrenzungswert vorgegeben, solange der Betrag eines Speicherstroms kleiner oder gleich einem vorgegebenen Maximalstromwert ist, und wird von dem Vorgabewert ein Korrekturwert subtrahiert und wird der reduzierte Vorgabewert als der Leistungsbegrenzungswert vorgegeben, wenn der Betrag des Speicherstroms größer als der vorgegebene Maximalstromwert ist.

Die Erfindung wird nachfolgend anhand von Ausführungsbeispielen näher erläutert. Dabei zeigen beispielhaft

Fig. 1  ein Ausführungsbeispiel für ein erfindungsgemäßes Schienenfahrzeug, das mit einer Leistungsvorgabeeinrichtung ausgestattet ist,

Fig. 2-4  Ausführungsbeispiele für erfindungsgemäße Leistungsvorgabeeinrichtungen näher im Detail und

Fig. 5-6  weitere Ausführungsbeispiele für erfindungsgemäße Schienenfahrzeuge, die mit Leistungsvorgabeeinrichtungen ausgestattet sind.

In den Figuren werden für identische oder vergleichbare Komponenten stets dieselben Bezugszeichen verwendet.

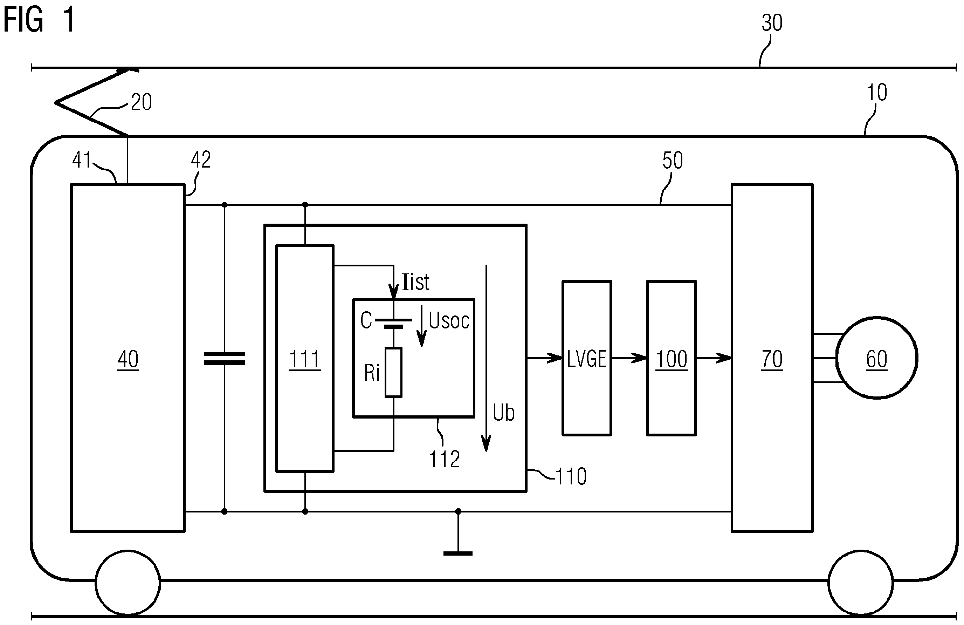

Die Figur 1 zeigt ein Ausführungsbeispiel für ein Schienenfahrzeug 10, das über einen Stromabnehmer 20 mit einem externen Energieversorgungsnetz 30 elektrisch verbunden werden kann, um beispielsweise das Schienenfahrzeug 10 mit der Energie des externen Energieversorgungsnetzes 30 zu betreiben.

An den Stromabnehmer 20 ist eine erste Anschlussseite 41 eines Umrichters 40 angeschlossen, bei dem es sich beispielsweise um einen Vierquadrantensteller handeln kann. Eine zweite Anschlussseite 42 des Umrichters 40 steht mit einem Gleichspannungszwischenkreis 50 in Verbindung, der unter anderem zum Betrieb eines Antriebsmotors 60 des Schienenfahrzeugs 10 dient. Bei dem Ausführungsbeispiel gemäß Figur 1 steht der Antriebsmotor 60 über einen weiteren, in der Figur 1 rechten Umrichter 70 mit dem Gleichspannungszwischenkreis 50 in Verbindung.

Zur Ansteuerung des Antriebsmotors 60 dient eine Motorsteuereinrichtung 100, die vorzugsweise räumlich im Bereich des rechten Umrichters 70 und des Antriebsmotors 60 angeordnet ist. Bei dem Ausführungsbeispiel gemäß Figur 1 steuert die Motorsteuereinrichtung 100 den Antriebsmotor mittelbar an, indem sie den rechten Umrichter 70 ansteuert bzw. beeinflusst. Alternativ kann die Motorsteuereinrichtung 100 bei geeigneter Ausgestaltung den Antriebsmotor 60 auch unmittelbar ansteuern.

Beispielsweise für den Fall, dass das Schienenfahrzeug 10 gemäß Figur 1 in einem Streckenabschnitt betrieben werden soll, bei dem kein externes Energieversorgungsnetz 30 zur Verfügung steht, weist das Schienenfahrzeug 10 eine Speichereinrichtung 110 auf. Die Speichereinrichtung 110 umfasst einen Gleichspannungswandler 111 in Form eines DC/DC-Stellers und einen elektrischen Energiespeicher in Form einer Batterie 112, an der eine Batteriespannung Ub anliegt und die einen Innenwiderstand Ri und eine Kapazität C aufweist. Mit der Energie der Speichereinrichtung 110 kann der Antriebsmotor 60 betrieben werden. Auch ist es möglich, im Motorbremsbetrieb des Antriebsmotors 60 die Bremsenergie in der Speichereinrichtung 110 zu speichern.

Außerdem ist eine Leistungsvorgabeeinrichtung LVGE vorhanden, die der Motorsteuereinrichtung 100 einen die maximale Motorleistung angebenden Leistungsbegrenzungswert PW übermittelt. Die Motorsteuereinrichtung 100 ist wiederum derart ausgebildet, dass sie die Motorleistung unter Berücksichtigung des Leistungsbegrenzungswerts PW auf einen tatsächlichen Motorleistungswert begrenzt oder beispielsweise durch eine entsprechende Regelung zu begrenzen versucht.

In den nachfolgenden Figuren werden Ausführungsbeispiele für bevorzugte Ausgestaltungen der Leistungsvorgabeeinrichtung LVGE näher beispielhaft erläutert.

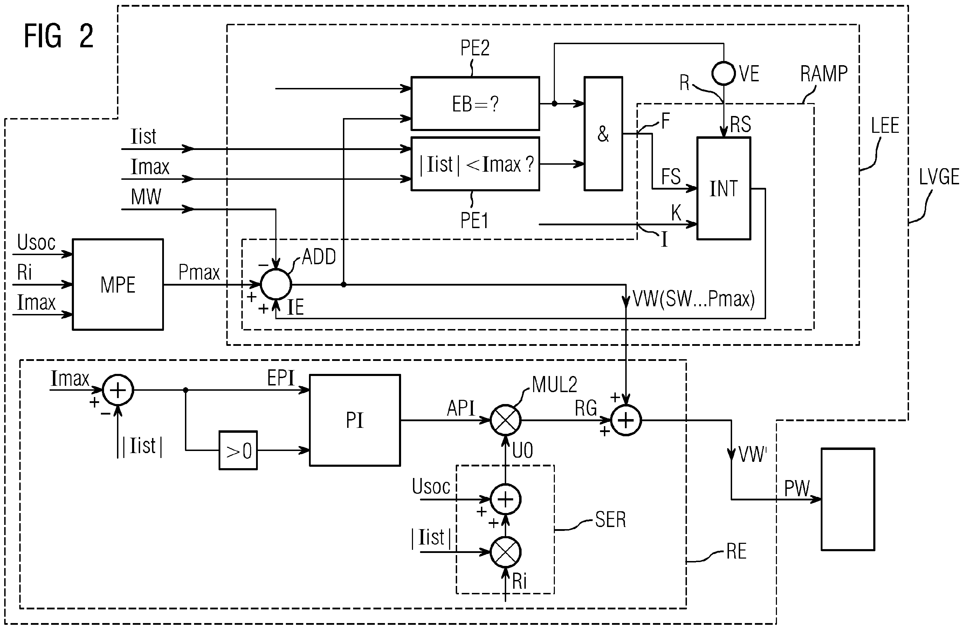

Bei dem Ausführungsbeispiel gemäß der Figur 2 weist die Leistungsvorgabeeinrichtung LVGE eine Reduktionseinrichtung RE auf, die einen in die Reduktionseinrichtung RE eingespeisten Vorgabewert VW als Leistungsbegrenzungswert PW weiterleitet, solange der Speicherstrom Iist betragsmäßig einen vorgegebenen Maximalstromwert Imax nicht überschreitet, und vom Vorgabewert VW einen Korrekturwert, der betragsmäßig durch eine Regelgröße RG gebildet wird, subtrahiert und den reduzierten bzw. bzw. durch Reduktion modifizierten Vorgabewert VW' als Leistungsbegrenzungswert PW ausgibt, wenn der Speicherstrom Iist betragsmäßig den vorgegebenen Maximalstromwert Imax überschreitet.

Die Leistungsvorgabeeinrichtung LVGE weist außerdem eine der Reduktionseinrichtung RE vorgeordnete Maximalleistungsbestimmungseinrichtung MPE auf, die anhand eines die Speichereinrichtung 110 beschreibenden Speichermodells, eines vom jeweiligen Ladezustand der Speichereinrichtung 110 abhängigen Leerlaufspannungswerts Usoc und des Maximalstromwerts Imax einen Maximalleistungswert Pmax berechnet, vorzugsweise wie folgt:

$$\mathrm{Pmax} = |\mathrm{Usoc} \cdot \mathrm{Imax}| + \mathrm{Ri} \cdot \mathrm{Imax}^2$$

Der Innenwiderstand Ri und der Ladezustand in Form des Leerlaufspannungswerts Usoc können als Modellparameter eines die Speichereinrichtung 110 beschreibenden Speichermodells angesehen werden. Der Ladezustand kann in vorteilhafter Weise durch Beobachten und Integrieren der in die Speichereinrichtung hineinfließenden Ladeströme und der aus der Speichereinrichtung herausfließenden Entladeströme ermittelt werden und der Leerlaufspannungswert Usoc kann dann unter Heranziehung des ermittelten Ladezustands und einer die Speichereinrichtung beschreibenden Ladekurve ermittelt bzw. errechnet werden. Dabei können zusätzliche Einflüsse wie beispielsweise die Abhängigkeit des Innenwiderstands von der Temperatur und dem Ladezustand oder die Abhängigkeit des Leerlaufspannungswerts von der Temperatur berücksichtigt werden.

Durch das Ermitteln des Maximalleistungswerts auf der Basis eines modellierten bzw. errechneten Leerlaufspannungswerts Usoc anstelle eines Messwerts, der die an der Speichereinrichtung tatsächliche abfallende Spannung Ub angibt, kann in vorteilhafter Weise eine Rückkopplung vermieden werden, die bei manchen Widerstandswerten des Innenwiderstands zu einem instabilen Gesamtsystemverhalten führen könnte.

Die Reduktionseinrichtung RE umfasst eine Spannungsermittlungseinrichtung SER, die den vom jeweiligen Ladezustand der Speichereinrichtung 110 abhängigen Leerlaufspannungswert Usoc und den Betrag des Produkts aus Speicherstrom Iist und Innenwiderstand Ri der Speichereinrichtung 110 addiert und die Summe als Spannungsabfallwert U0 ausgibt.

Die Reduktionseinrichtung RE weist außerdem eine Multiplikationseinrichtung MUL2 auf, die eingangsseitig mit dem Spannungsabfallwert U0 der Spannungsermittlungseinrichtung SER sowie einem Ausgangswert API einer Regeleinrichtung PI beaufschlagt ist und das gebildete Produkt als die Regelgröße RG ausgibt.

Die Regeleinrichtung PI ist vorzugsweise ein PI-Regler, der als Eingangsgröße EPI mit dem Maximalstromwert Imax abzüglich des Betrages des Speicherstroms Iist beaufschlagt ist, sofern der Betrag größer als Null ist oder Null beträgt und andernfalls zurückgesetzt wird.

Bei dem Ausführungsbeispiel gemäß Figur 2 ist zwischen die Maximalleistungsbestimmungseinrichtung MPE und die Reduktionseinrichtung RE eine Leistungserhöhungseinrichtung LEE geschaltet, die nach jedem Rücksetzen als Vorgabewert VW jeweils einen Startwert SW erzeugt, der kleiner als ein vorgegebener Maximalleistungswert Pmax ist, und den Vorgabewert VW nachfolgend bis maximal auf den Maximalleistungswert Pmax erhöht, solange eine vorgegebene auf die Ist-Leistung des Antriebsmotors bezogene Erhöhungsbedingung EB erfüllt ist und gleichzeitig - was durch ein UND-Glied "&" geprüft wird - der Speicherstrom Iist betragsmäßig einen vorgegebenen Maximalstromwert Imax unterschreitet.

Die Prüfung, ob der Speicherstrom Iist betragsmäßig den vorgegebenen Maximalstromwert Imax unterschreitet, erfolgt bei dem Ausführungsbeispiel gemäß Figur 2 in einer ersten Prüfeinrichtung PE1. Die Prüfung, ob die Erhöhungsbedingung EB erfüllt ist, erfolgt bei dem Ausführungsbeispiel gemäß Figur 2 in einer zweiten Prüfeinrichtung PE2.

Die zweite Prüfeinrichtung PE2 der Leistungserhöhungseinrichtung LEE ist vorzugsweise derart ausgebildet, dass sie auf die Ist-Leistung des Antriebsmotors bezogene Erhöhungsbedingung EB als erfüllt ansieht, wenn der tatsächliche Wert der Ist-Leistung des Antriebsmotors Pist größer als der jeweils aktuelle Leistungsbegrenzungswert PW ist oder diesem entspricht.

Vorteilhaft ist es, wenn die Prüfeinrichtung PE2 der Leistungserhöhungseinrichtung LEE die auf die Ist-Leistung des Antriebsmotors bezogene Erhöhungsbedingung EB auch dann als erfüllt ansieht, wenn der Betrag der Abweichung zwischen der tatsächlichen Ist-Leistung des Antriebsmotors Pist und dem jeweils aktuellen Leistungsbegrenzungswert PW kleiner als eine vorgegebene Schwelle ist.

Bei dem Ausführungsbeispiel gemäß der Figur 2 weist die Leistungserhöhungseinrichtung LEE ein Rampenglied RAMP auf, das den jeweils aktuellen Vorgabewert VW gemäß einer vorgegebenen Rampe erhöht und den jeweils erhöhten Vorgabewert VW ausgangsseitig ausgibt, wenn an einem Freigabeeingang F des Rampenglieds RAMP ein Freigabesignal FS anliegt, und andernfalls, also im Falle eines Fehlens des Freigabesignals FS am Freigabeeingang F, den Vorgabewert VW ausgangsseitig unverändert lässt.

Das Rampenglied RAMP weist außerdem einen Rücksetzeingang R auf, der den ausgangsseitig ausgegebenen Vorgabewert VW jeweils auf den Startwert SW zurücksetzt, wenn an dem Rücksetzeingang R ein Rücksetzsignal RS anliegt.

Dem Rücksetzeingang R kann eine Vergleichseinrichtung VE vorgeordnet sein, die das Rücksetzsignal RS erzeugt.

Die Vergleichseinrichtung VE kann das Rücksetzsignal RS erzeugen, sobald die tatsächliche Motoristleistung Pist den jeweils aktuellen Leistungsbegrenzungswert PW unterschreitet.

Alternativ oder zusätzlich kann die Vergleichseinrichtung VE das Rücksetzsignal RS erzeugen, sobald die tatsächliche Ist-Leistung des Antriebsmotors Pist den jeweils aktuellen Leistungsbegrenzungswert PW über ein vorgegebenes Maß hinaus unterschreitet.

Auch kann die Vergleichseinrichtung VE alternativ das Rücksetzsignal RS erzeugen, sobald die tatsächliche Ist-Leistung des Antriebsmotors Pist den Startwert SW unterschreitet.

Je nach der Ausgestaltung der zweiten Prüfeinrichtung PE2 und der Prüfung der auf die Ist-Leistung des Antriebsmotors bezogenen Erhöhungsbedingung EB kann die Vergleichseinrichtung VE beispielsweise durch einen Inverter gebildet sein, der zwischen den Ausgang der zweiten Prüfeinrichtung PE2 und den Rücksetzeingang R geschaltet ist.

Bei dem Ausführungsbeispiel gemäß Figur 2 weist das Rampenglied RAMP einen Integrator INT auf, der nach einem jeden Rücksetzen eine vorgegebene Konstante K über der Zeit bis zum Erreichen des Maximalleistungswerts Pmax integriert. Nachgeordnet ist ein Leistungsaddierer ADD, der das vom Integrator INT ausgegebene Integrationsergebnis IE mit positivem Vorzeichen, einen durch die Differenz zwischen dem Maximalwert und dem Startwert SW definierten Margenwert MW mit negativem Vorzeichen und den Maximalleistungswert Pmax unter Bildung des Vorgabewerts VW addiert.

Bei dem Ausführungsbeispiel gemäß der Figur 2 übermittelt die Leistungsvorgabeeinrichtung LVGE den Vorgabewert VW der Leistungserhöhungseinrichtung LEE nicht unmittelbar an die Motorsteuereinrichtung 100, sondern erst nach einer etwaigen Modifizierung, konkret Reduktion, durch die Reduktionseinrichtung RE, wie dies oben beschrieben wurde.

Die oben beschriebene Regelung des Vorgabewerts VW gilt sowohl für das Entladen der Speichereinrichtung 110 im Antriebsbetrieb als auch für das Entladen, wenn der Antriebsmotor 60 als Motorbremse betrieben wird. Denn die unterschiedlichen Betriebsarten schlagen sich lediglich im Vorzeichen des Speicherstromes Iist, das entsprechend berücksichtigt wird, nieder.

Durch die oben beschriebene Regelung des Vorgabewerts VW kann in vorteilhafter Weise vermieden werden, dass etwaige Arbeitstoleranzen in der Motorsteuereinrichtung 100, beispielsweise solche, die zu einem zu hohen Motorstrom im Antriebsmotor 60 und damit in Folge auch zu einem zu hohen Speicherstrom Iist führen, eine Überlastung der Speichereinrichtung 110 zur Folge haben oder zu einem Auslösen vorgeordneter Schutzeinrichtungen führen.

Die Leistungsvorgabeeinrichtung LVGE kann durch eine einzige Recheneinrichtung, die zur Ausführung der oben beschriebenen Verfahrensschritte programmiert ist, gebildet sein. Alternativ können Teile der Leistungsvorgabeeinrichtung LVGE auf zwei oder mehr Recheneinrichtungen aufgeteilt sein. Zum Beispiel können die Maximalleistungsbestimmungseinrichtung MPE und die Leistungserhöhungseinrichtung LEE in einer Recheneinrichtung implementiert sein und die Reduktionseinrichtung RE in einer anderen Recheneinrichtung.

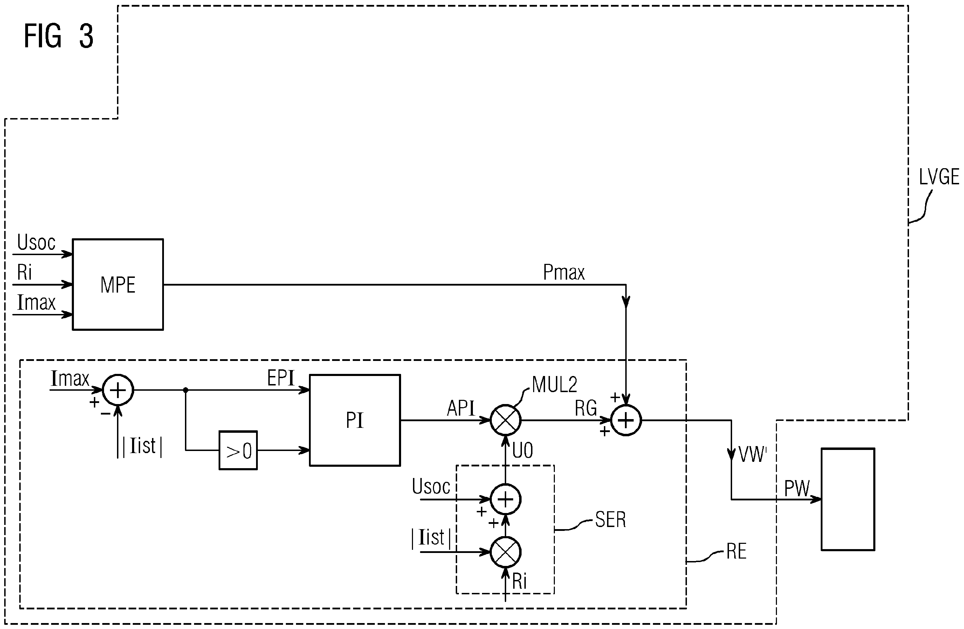

Die Figur 3 zeigt eine Ausführungsvariante des Ausführungsbeispiels gemäß Figur 2. Bei der Ausführungsvariante Figur 3 fehlt die Leistungserhöhungseinrichtung LEE. Die Reduktionseinrichtung RE wird mit dem Maximalleistungswert Pmax der Maximalleistungsbestimmungseinrichtung MPE direkt gespeist. Ansonsten gelten die obigen Ausführungen im Zusammenhang mit der Figur 2 entsprechend.

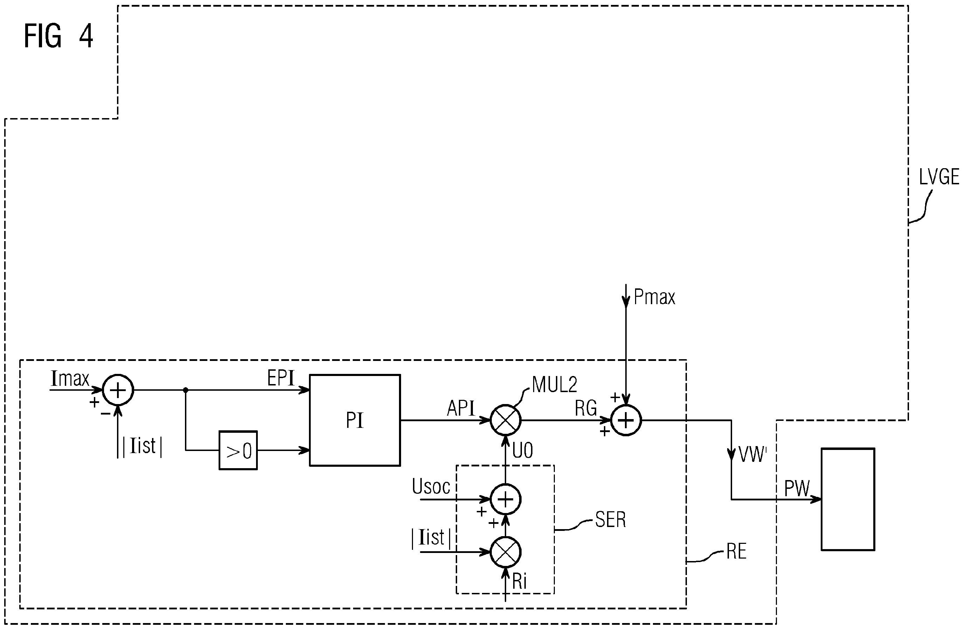

Die Figur 4 zeigt eine Ausführungsvariante des Ausführungsbeispiels gemäß Figur 3. Bei der Ausführungsvariante Figur 4 fehlt außerdem die Maximalleistungsbestimmungseinrichtung MPE. Die Reduktionseinrichtung RE wird mit einem fest vorgegebenen Maximalleistungswert Pmax als Vorgabewert VW gespeist.

Bei den obigen Ausführungsbeispielen kann die Leistungsvorgabeeinrichtung LVGE eine von der Speichereinrichtung 110 und der Motorsteuereinrichtung 100 räumlich getrennte Baueinheit sein, wie dies schematisch in der Figur 1 gezeigt ist, und durch eine oder mehrere separate, entsprechend programmierte Recheneinrichtungen gebildet sein.

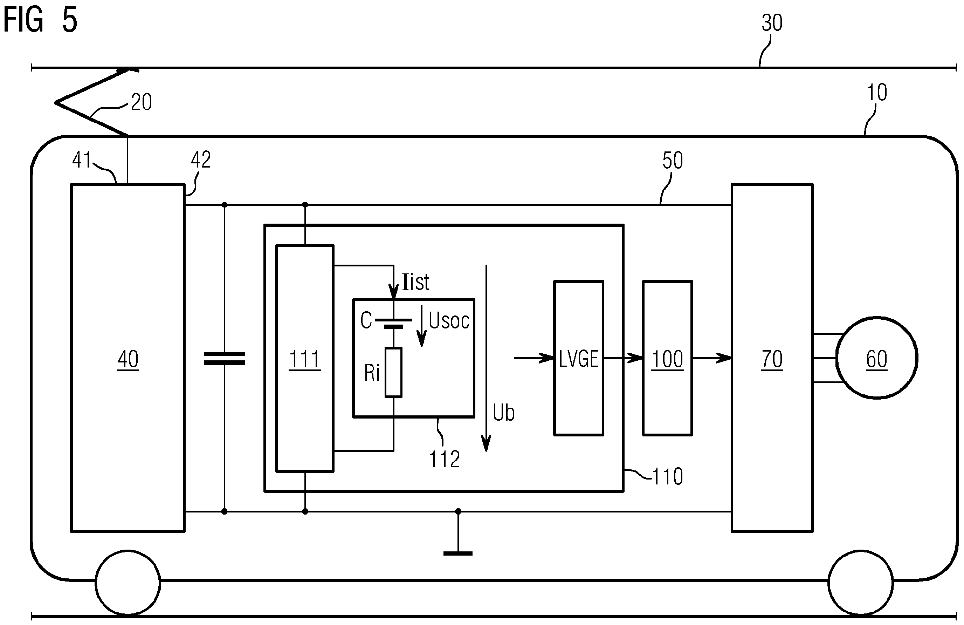

Alternativ kann die Leistungsvorgabeeinrichtung LVGE in der Speichereinrichtung 110 als speichereinrichtungseigene Komponente integriert sein, wie in der Figur 5 gezeigt ist. Diese Variante ist besonders vorteilhaft, weil in der Speichereinrichtung 110 die von der Maximalleistungsbestimmungseinrichtung MPE und der Leistungserhöhungseinrichtung LEE zu verarbeitenden Daten direkt vorliegen.

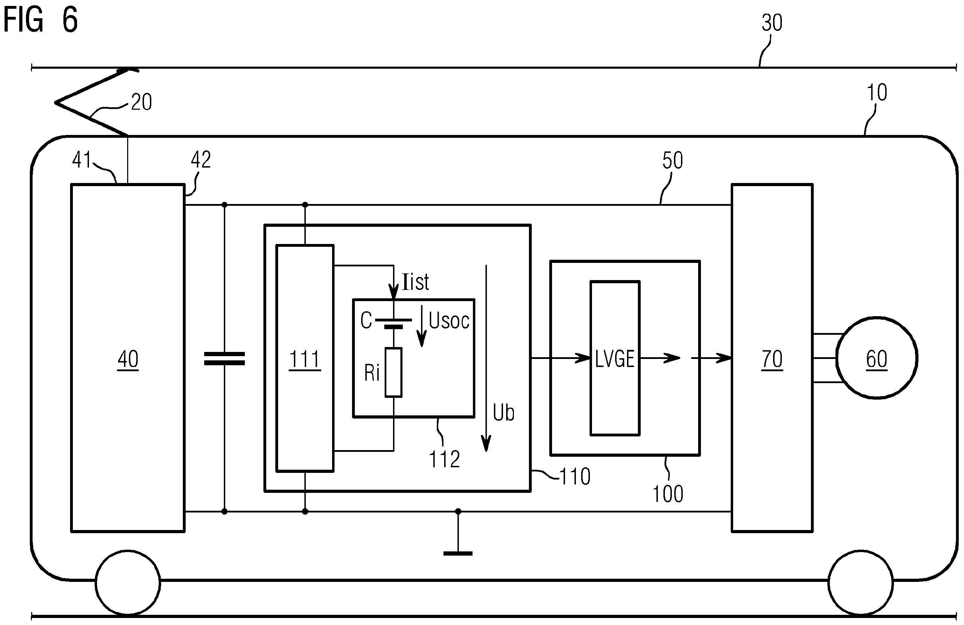

Auch ist es möglich, die Leistungsvorgabeeinrichtung LVGE in der Motorsteuereinrichtung 100 als motorsteuereinrichtungseigene Komponente zu integrieren, wie in der Figur 6 gezeigt ist. Bei dieser Variante werden die von der Maximalleistungsbestimmungseinrichtung MPE zu verarbeitenden Daten von der Speichereinrichtung 110 zu der Leistungsvorgabeeinrichtung LVGE übertragen, beispielsweise über ein Datenbussystem.

Darüber hinaus ist es möglich, Teile der Leistungsvorgabeeinrichtung LVGE - vorzugsweise zumindest die Maximalleistungsbestimmungseinrichtung MPE - in der Speichereinrichtung 110 als speichereinrichtungseigene Komponenten zu integrieren und andere Teile - vorzugsweise zumindest die Reduktionseinrichtung RE - in der Motorsteuereinrichtung 100 als motorsteuereinrichtungseigene Komponenten zu integrieren. Diese Variante ist vorteilhaft, weil die von der Maximalleistungsbestimmungseinrichtung MPE zu verarbeitenden Daten in der Speichereinrichtung 110 vorliegen. Die Reduktionseinrichtung RE vor Ort in der Motorsteuereinrichtung 100 kann schnell eingreifen, um den Feinabgleich durchzuführen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Schienenfahrzeug |
| 20 | Stromabnehmer |
| 30 | Energieversorgungsnetz |
| 40 | Umrichter |
| 41 | erste Anschlussseite |
| 42 | zweite Anschlussseite |
| 50 | Gleichspannungszwischenkreis |
| 60 | Antriebsmotor |
| 70 | Umrichter |
| 100 | Motorsteuereinrichtung |
| 110 | Speichereinrichtung |
| 111 | Gleichspannungswandler |
| 112 | elektrischer Energiespeicher |

| | |
|---|---|
| ADD | Leistungsaddierer |
| API | Ausgangswert |
| C | Kapazität |
| EB | Erhöhungsbedingung |
| EPI | Eingangsgröße |
| F | Freigabeeingang |
| FS | Freigabesignal |
| IE | Integrationsergebnis |
| Iist | Speicherstrom |
| Imax | Maximalstromwert |
| INT | Integrator |
| K | Konstante |
| LEE | Leistungserhöhungseinrichtung |
| LVGE | Leistungsvorgabeeinrichtung |
| MPE | Maximalleistungsbestimmungseinrichtung |
| MUL2 | Multiplikationseinrichtung |

| MW | Margenwert |
| PE1 | erste Prüfeinrichtung |
| PE2 | zweite Prüfeinrichtung |
| PI | Regeleinrichtung |
| Pist | Ist-Leistung des Antriebsmotors |
| Pmax | Maximalleistungswert |
| PW | Leistungsbegrenzungswert |
| R | Rücksetzeingang |
| RAMP | Rampenglied |
| RE | Reduktionseinrichtung |
| RG | Regelgröße |
| Ri | Innenwiderstand |
| RS | Rücksetzsignal |
| SER | Spannungsermittlungseinrichtung |
| SW | Startwert |
| U0 | Spannungsabfallwert |
| Ub | Batteriespannung |
| Usoc | Leerlaufspannungswert |
| VE | Vergleichseinrichtung |
| VW | Vorgabewert |
| VW' | modifizierter Vorgabewert |
| & | UND-Glied |

**Patentansprüche**

1.  Fahrzeug (10) mit einem Gleichspannungszwischenkreis (50), zumindest einem an den Gleichspannungszwischenkreis (50) angeschlossenen Antriebsmotor (60), einer den Antriebsmotor (60) ansteuernden Motorsteuereinrichtung (100) und zumindest einer an den Gleichspannungszwischenkreis (50) angeschlossenen elektrischen Speichereinrichtung (110),
    **dadurch gekennzeichnet, dass** eine Leistungsvorgabeeinrichtung (LVGE) der Motorsteuereinrichtung (100) einen eine maximale Motorleistung angebenden Leistungsbegrenzungswert (PW) vorgibt,

    wobei die Motorsteuereinrichtung (100) ausgebildet ist, eine tatsächliche Leistung des Antriebsmotors (60) unter Berücksichtigung des Leistungsbegrenzungswerts (PW) zu begrenzen, und
    wobei die Leistungsvorgabeeinrichtung (LVGE) eine Reduktionseinrichtung (RE) aufweist, wobei die Reduktionseinrichtung (RE) einen Vorgabewert (VW) als den Leistungsbegrenzungswert (PW) vorgibt, solange der Betrag eines Speicherstroms (Iist) kleiner oder gleich einem vorgegebenen Maximalstromwert (I-max) ist, und von dem Vorgabewert (VW) einen Korrekturwert subtrahiert und den reduzierten Vorgabewert (VW') als den Leistungsbegrenzungswert (PW) vorgibt, wenn der Betrag des Speicherstroms (Iist) größer als der vorgegebene Maximalstromwert (Imax) ist.

2.  Fahrzeug (10) nach Anspruch 1,
    **dadurch gekennzeichnet, dass** die Reduktionseinrichtung (RE) aufweist:

    - eine Spannungsermittlungseinrichtung (SER), die einen Leerlaufspannungswert (Usoc) und einen Betrag des Produkts aus dem Speicherstrom (Iist) und einem Innenwiderstand (Ri) der Speichereinrichtung (110) addiert und die Summe als einen Spannungsabfallwert (U0) ausgibt, und
    - eine Multiplikationseinrichtung (MUL2), die eingangsseitig mit dem Spannungsabfallwert (U0) sowie einem Ausgangswert (API) einer Regeleinrichtung (PI) beaufschlagt ist und das gebildete Produkt als eine Regelgröße (RG) ausgibt, deren Betrag den Korrekturwert bildet.

3.  Fahrzeug (10) nach Anspruch 2,
    **dadurch gekennzeichnet, dass** die Regeleinrichtung (PI) ein PI-Regler ist, der als Eingangsgröße (EPI) mit dem Maximalstromwert (Imax) abzüglich des Betrages des Speicherstroms (Iist) beaufschlagt ist, sofern der Betrag größer oder gleich Null ist, und andernfalls zurückgesetzt wird.

4.  Fahrzeug (10) nach einem der voranstehenden Ansprüche,

**dadurch gekennzeichnet, dass** ein fest vorgegebener, während des Betriebs unveränderter Vorgabewert (VW) in die Reduktionseinrichtung (RE) einspeist wird.

5. Fahrzeug (10) nach einem der Ansprüche 1 bis 3,
**dadurch gekennzeichnet, dass**

- die Leistungsvorgabeeinrichtung (LVGE) eine Maximalleistungsbestimmungseinrichtung (MPE) aufweist, die anhand eines die Speichereinrichtung (110) beschreibenden Speichermodells, des Leerlaufspannungswerts (Usoc) und des Maximalstromwerts (Imax) einen Maximalleistungswert (Pmax) berechnet, und
- die Maximalleistungsbestimmungseinrichtung (MPE) den Maximalleistungswert (Pmax) als Vorgabewert (VW) in die Reduktionseinrichtung (RE) einspeist.

6. Fahrzeug (10) nach Anspruch 5,
**dadurch gekennzeichnet, dass** die Leistungsvorgabeeinrichtung (LVGE) ferner eine Leistungserhöhungseinrichtung (LEE) umfasst, wobei die Leistungserhöhungseinrichtung (LEE)

- nach jedem Rücksetzen als Vorgabewert (VW) einen Startwert (SW) erzeugt, der kleiner als der vorgegebene Maximalleistungswert (Pmax) ist,
- den Vorgabewert (VW) nachfolgend bis maximal auf den Maximalleistungswert (Pmax) erhöht, solange eine vorgegebene, auf die Ist-Leistung des Antriebsmotors (60) bezogene Erhöhungsbedingung (EB) erfüllt ist und gleichzeitig ein Betrag des Speicherstroms (Iist) den Maximalstromwert (Imax) unterschreitet, und
- den Vorgabewert (VW) in die Reduktionseinrichtung (RE) einspeist.

7. Fahrzeug (10) nach Anspruch 6,
**dadurch gekennzeichnet, dass** die Leistungserhöhungseinrichtung (LEE) ein Rampenglied (RAMP) aufweist, das den jeweils aktuellen Vorgabewert (VW) gemäß einer vorgegebenen Rampe erhöht und den jeweils erhöhten Vorgabewert (VW) ausgangsseitig ausgibt, wenn an einem Freigabeeingang (F) des Rampenglieds (RAMP) ein Freigabesignal (FS) anliegt, und andernfalls den Vorgabewert (VW) ausgangsseitig unverändert lässt.

8. Fahrzeug (10) nach Anspruch 7,
**dadurch gekennzeichnet, dass** das Rampenglied (RAMP) einen Rücksetzeingang (R) aufweist, der den ausgangsseitig ausgegebenen Vorgabewert (VW) jeweils auf den Startwert (SW) zurücksetzt, wenn an dem Rücksetzeingang (R) ein Rücksetzsignal (RS) anliegt.

9. Leistungsvorgabeeinrichtung (LVGE) für ein Fahrzeug (10), wobei das Fahrzeug (10) mit einem Gleichspannungszwischenkreis (50), zumindest einem an den Gleichspannungszwischenkreis (50) angeschlossenen Antriebsmotor (60), einer den Antriebsmotor (60) ansteuernden Motorsteuereinrichtung (100) und zumindest einer an den Gleichspannungszwischenkreis (50) angeschlossenen elektrischen Speichereinrichtung (110) ausgestattet ist,
**dadurch gekennzeichnet, dass** die Leistungsvorgabeeinrichtung (LVGE) ausgestaltet ist, der Motorsteuereinrichtung (100) einen eine maximale Motorleistung angebenden Leistungsbegrenzungswert (PW) vorzugeben, und die Leistungsvorgabeeinrichtung (LVGE) eine Reduktionseinrichtung (RE) aufweist, wobei die Reduktionseinrichtung (RE) ausgestaltet ist, einen in diese eingespeisten Vorgabewert (VW) als den Leistungsbegrenzungswert (PW) vorzugeben, solange der Betrag eines Speicherstroms (Iist) kleiner oder gleich einem vorgegebenen Maximalstromwert (Imax) ist, und von dem Vorgabewert (VW) einen Korrekturwert zu subtrahieren und den reduzierten Vorgabewert (VW') als den Leistungsbegrenzungswert (PW) vorzugeben, wenn der Betrag des Speicherstroms (Iist) größer als der vorgegebene Maximalstromwert (Imax) ist.

10. Verfahren zum Betreiben eines Fahrzeugs (10), wobei das Fahrzeug (10) mit einem Gleichspannungszwischenkreis (50), zumindest einem an den Gleichspannungszwischenkreis (50) angeschlossenen Antriebsmotor (60), einer den Antriebsmotor (60) ansteuernden Motorsteuereinrichtung (100) und zumindest einer an den Gleichspannungszwischenkreis (50) angeschlossenen elektrischen Speichereinrichtung (110) ausgestattet ist, **dadurch gekennzeichnet, dass**

- der Motorsteuereinrichtung (100) von einer Leistungsvorgabeeinrichtung (LVGE) ein eine maximale Motorleistung angebender Leistungsbegrenzungswert (PW) vorgegeben wird, und von der Motorsteuereinrichtung (100) eine tatsächliche Leistung des Antriebsmotors (60) unter Berücksichtigung des Leistungsbegrenzungswerts begrenzt wird, und
- von einer Reduktionseinrichtung (RE) der Leistungsvorgabeeinrichtung (LVGE) ein in diese eingespeister Vorgabewert (VW) als Leistungsbegrenzungswert (PW) vorgegeben wird, solange der Betrag eines Speicherstroms (Iist) kleiner oder gleich einem vorgegebenen Maximalstromwert (Imax) ist, und von dem Vorgabewert (VW) ein Korrekturwert subtrahiert wird und der reduzierte Vorgabewert (VW') als der Leistungsbegrenzungswert (PW) vorgegeben wird, wenn der Betrag des Speicherstroms (Iist) größer als der vorgegebene Maximalstromwert (Imax) ist.

11. Verfahren nach Anspruch 10,
**dadurch gekennzeichnet, dass** aufweist:

- von einer Spannungsermittlungseinrichtung (SER) der Reduktionseinrichtung (RE) ein Leerlaufspannungswert (Usoc) und ein Betrag des Produkts aus dem Speicherstrom (Iist) und einem Innenwiderstand (Ri) der Speichereinrichtung (110) addiert wird und die Summe als ein Spannungsabfallwert (U0) ausgegeben wird, und
- von einer Multiplikationseinrichtung (MUL2) der Reduktionseinrichtung (RE), welche eingangsseitig mit dem Spannungsabfallwert (U0) sowie einem Ausgangswert (API) einer Regeleinrichtung (PI) beaufschlagt ist, das gebildete Produkt als eine Regelgröße (RG) ausgegeben wird, deren Betrag den Korrekturwert bildet.

12. Verfahren nach Anspruch 10 oder 11,
**dadurch gekennzeichnet, dass** von einer Maximalleistungsbestimmungseinrichtung (MPE) der Leistungsvorgabeeinrichtung (LVGE) anhand eines die Speichereinrichtung (110) beschreibenden Speichermodells, des Leerlaufspannungswerts (Usoc) und des Maximalstromwerts (Imax) ein Maximalleistungswert (Pmax) berechnet wird, und der berechnete Maximalleistungswert (Pmax) als Vorgabewert (VW) in die Reduktionseinrichtung (RE) einspeist wird.

13. Verfahren nach Anspruch 12,
**dadurch gekennzeichnet, dass** von einer Leistungserhöhungseinrichtung (LEE) der Leistungsvorgabeeinrichtung (LVGE) nach jedem Rücksetzen als Vorgabewert (VW) ein Startwert (SW) erzeugt wird, der kleiner als der vorgegebene Maximalleistungswert (Pmax) ist, der Vorgabewert (VW) nachfolgend bis maximal auf den Maximalleistungswert (Pmax) erhöht wird, solange eine vorgegebene, auf die Ist-Leistung des Antriebsmotors (60) bezogene Erhöhungsbedingung (EB) erfüllt ist und gleichzeitig ein Betrag des Speicherstroms (Iist) den Maximalstromwert (Imax) unterschreitet, und der Vorgabewert (VW) in die Reduktionseinrichtung (RE) eingespeist wird.

14. Verfahren nach Anspruch 13,
**dadurch gekennzeichnet, dass** von einem Rampenglied (RAMP) der Leistungserhöhungseinrichtung (LEE) der jeweils aktuelle Vorgabewert (VW) gemäß einer vorgegebenen Rampe erhöht und der jeweils erhöhte Vorgabewert (VW) ausgangsseitig ausgegeben wird, wenn an einem Freigabeeingang (F) des Rampenglieds (RAMP) ein Freigabesignal (FS) anliegt, und andernfalls den Vorgabewert (VW) ausgangsseitig unverändert gelassen wird.

15. Verfahren nach Anspruch 14,
**dadurch gekennzeichnet, dass** von einem Rücksetzeingang (R) des Rampenglieds (RAMP) der ausgangsseitig ausgegebene Vorgabewert (VW) jeweils auf den Startwert (SW) zurückgesetzt wird, wenn an dem Rücksetzeingang (R) ein Rücksetzsignal (RS) anliegt.

FIG 1

EP 4 000 984 A1

FIG 2

EP 4 000 984 A1

FIG 3

EP 4 000 984 A1

FIG 4

# FIG 5

EP 4 000 984 A1

FIG 6

EP 4 000 984 A1

Europäisches
Patentamt

European
Patent Office

Office européen
des brevets

## EUROPÄISCHER RECHERCHENBERICHT

**Nummer der Anmeldung**

**EP 21 20 7516**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 203015 B3 (SIEMENS AG [DE]) 9. Mai 2019 (2019-05-09) * Seite 2; Abbildungen 2-5 * * Absätze [0001], [0002], [0026] – [0030], [0039], [0071] – [0078] * ----- | 1-15 | INV. B60L3/00 B60L3/04 B60L3/06 B60L9/18 B60L58/10 |
| X | US 2010/250041 A1 (LI FANG [CN]) 30. September 2010 (2010-09-30) * Abbildungen 1-6 * * Absätze [0060] – [0074], [0078] * ----- | 1-15 | B60W30/188 B60L50/53 B60L15/10 |
| X | US 2010/026222 A1 (YOSHIDA TAKASHI [JP] ET AL) 4. Februar 2010 (2010-02-04) | 1,9,10 | |
| A | * Absätze [0061] – [0067], [0099] – [0101], [0105], [0106]; Abbildungen 2,3,5-7 * ----- | 2-8, 11-15 | |

**RECHERCHIERTE SACHGEBIETE (IPC)**

B60L
B60W

Der vorliegende Recherchenbericht wurde für alle Patentansprüche erstellt

| Recherchenort | Abschlußdatum der Recherche | Prüfer |
|---|---|---|
| Den Haag | 5. April 2022 | Gücin, Taha |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 20 7516

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-04-2022

| Im Recherchenbericht angeführtes Patentdokument | Datum der Veröffentlichung | Mitglied(er) der Patentfamilie | | Datum der Veröffentlichung |
|---|---|---|---|---|
| DE 102018203015 B3 | 09-05-2019 | CN | 111770851 A | 13-10-2020 |
| | | DE | 102018203015 B3 | 09-05-2019 |
| | | EP | 3743305 A1 | 02-12-2020 |
| | | WO | 2019166151 A1 | 06-09-2019 |
| US 2010250041 A1 | 30-09-2010 | CN | 101214797 A | 09-07-2008 |
| | | EP | 2226229 A1 | 08-09-2010 |
| | | US | 2010250041 A1 | 30-09-2010 |
| | | WO | 2009089718 A1 | 23-07-2009 |
| US 2010026222 A1 | 04-02-2010 | CN | 101919157 A | 15-12-2010 |
| | | DE | 112009000114 T5 | 25-11-2010 |
| | | JP | 5019133 B2 | 05-09-2012 |
| | | JP | 2010041741 A | 18-02-2010 |
| | | US | 2010026222 A1 | 04-02-2010 |
| | | WO | 2010013534 A1 | 04-02-2010 |

EPO FORM P0461

Für nähere Einzelheiten zu diesem Anhang : siehe Amtsblatt des Europäischen Patentamts, Nr.12/82